# EUROPÄISCHE PATENTSCHRIFT

(11) **EP 4 038 480 B1**
(45) Veröffentlichungstag und Bekanntmachung des Hinweises auf die Patenterteilung: **10.05.2023**
(21) Anmeldenummer: 21716600.8
(22) Anmeldetag: 16.03.2021
(51) Int. Cl.: G06F 3/01, G06F 3/0488, B60K 37/06, G06F 3/16, G06F 3/041, B60K 35/00, G06F 3/0482, G06F 3/04842

(54) **BEDIENVORRICHTUNG ZUM BEDIENEN EINES INFOTAINMENTSYSTEMS, VERFAHREN ZUM BEREITSTELLEN EINES AKUSTISCHEN SIGNALS FÜR EINE BEDIENVORRICHTUNG UND KRAFTFAHRZEUG MIT EINER BEDIENVORRICHTUNG**
OPERATOR CONTROL DEVICE FOR OPERATING AN INFOTAINMENT SYSTEM, METHOD FOR PROVIDING AN AUDIBLE SIGNAL FOR AN OPERATOR CONTROL DEVICE, AND MOTOR VEHICLE HAVING AN OPERATOR CONTROL DEVICE
DISPOSITIF DE COMMANDE D'OPÉRATEUR POUR FAIRE FONCTIONNER UN SYSTÈME D'INFO-DIVERTISSEMENT, PROCÉDÉ POUR FOURNIR UN SIGNAL SONORE POUR UN DISPOSITIF DE COMMANDE D'OPÉRATEUR, ET VÉHICULE À MOTEUR AYANT UN DISPOSITIF DE COMMANDE D'OPÉRATEUR

(30) Priorität: 17.03.2020 DE 102020107338
(43) Veröffentlichungstag der Anmeldung: 10.08.2022
(73) Patentinhaber: Audi AG, 85045 Ingolstadt (DE)
(72) Erfinder: MÜLLER, Ulrich, 85055 Ingolstadt (DE); SPAHMANN, Andreas, 74196 Neuenstadt (DE)
(74) Vertreter: Hofstetter, Schurack & Partner
(86) Internationale Anmeldenummer: PCT/EP2021/056613
(87) Internationale Veröffentlichungsnummer: WO 2021/185801

(56) Entgegenhaltungen:
- EP-A1- 3 043 240
- DE-A1- 10 304 704
- DE-A1-102010 026 910
- DE-A1-102013 020 990

## Beschreibung

Die Erfindung betrifft eine Bedienvorrichtung zum Bedienen eines Infotainmentsystems, ein Kraftfahrzeug mit einer solchen Bedienvorrichtung und ein Verfahren zum Bereitstellen eines akustischen Signals für eine Bedienvorrichtung.

Zur Bedienung eines Infotainmentsystems, insbesondere eines Infotainmentsystems eines Fahrzeugs, sind Bedienvorrichtungen mit einer berührungsempfindlichen Anzeigevorrichtung bekannt, die einem Nutzer eine akustische oder haptische Rückmeldung bei der Bedienung bereitstellen, wobei die haptische Rückmeldung beispielsweise durch einen Aktuator erzeugt wird. Eine berührungsempfindliche Anzeigevorrichtung ist zum Beispiel ein Touchscreen, über den grafische Bedienelemente des Infotainmentsystems angezeigt werden können. Nachteilig ist, dass beispielsweise die Aktuatorik zur Erzeugung der haptischen Rückmeldung sehr komplexe und teure mechanische Elemente umfasst. Ein Nachteil bei einer rein akustischen Rückmeldung ist es, dass ein Benutzer keine haptische Rückmeldung erhält.

Aus der DE 10 2006 021 593 A1 ist eine Fahrzeugfunktionssteuerung, insbesondere zur Steuerung von Komfortfunktionen, bekannt. Die Steuerung ist derart ausgebildet, das sie in Abhängigkeit von in einer Anzeigevorrichtung dargestellten Auswahlmöglichkeiten ein funktionsabhängiges mechanisches und/oder auditives Rückmeldesignal des Aktors zuordnet.

Aus der DE 10 2013 020 990 A1 sind ein Kraftfahrzeug und ein Verfahren zum Bereitstellen eines vorbestimmten akustischen Signals für ein Bedienelement bekannt.

Aus der WO 2019/101879 A1 ist ein transparenter Schalter zur Integration in ein Display bekannt, bei dem für wichtige Benutzereingaben ein mechanisches Feedback gegeben wird.

Aus der DE 10 2010 026 910 A1 sind eine gattungsgemäße Bedienvorrichtung und ein Verfahren zum Steuern und Auslesen eines Bedienfeldes mit einer Vielzahl von Funktionsbereichen bekannt, über die abhängig von einer manuellen Krafteinwirkung pro Funktionsbereich eine zugeordnete Schaltfunktion schaltbar und dabei eine haptische Rückmeldung gebbar ist. Um ein verbessertes Steuern und Auslesen des Bedienfeldes zu ermöglichen, sind ein Erkennen und lokalisieren zumindest eines Vorgangs einer Annäherung an das Bedienfeld oder einer Berührung des Bedienfeldes und ein Geben der haptischen Rückmeldung nur, falls kurz vor oder zumindest bei der manuellen Krafteinwirkung der zumindest eine Vorgang für genau einen der Funktionsbereiche der Vielzahl der Funktionsbereiche erkannt und lokalisiert ist, vorgesehen.

Aus der EP 3 043 240 A1 sind eine berührungsempfindliche Bedienvorrichtungen mit einem Touchscreen bekannt, welche bei einer Betätigung eines virtuellen Bedienelements eine haptische Rückkopplung erzeugen, sowie ein Verfahren zum Bedienen von Funktionen.

Aus der DE 10 2013 020 990 A1 ist ein Kraftfahrzeug und ein Verfahren zum Bereitstellen eines vorbestimmten akustischen Signals für ein Bedienelement bekannt.

Aus der DE 103 04 704 A1 ist ein Dateneingabegerät mit einem Touchpad bekannt. Das Dateneingabegerät umfasst ein Touchpad, welches in einem Gehäuse relativ zu mehreren Tastern kippbeweglich gelagert ist und mittels der Taster in seine obere Ruhestellung vorgespannt ist. Wird der Fingerdruck auf das Touchpad verstärkt, so kann mindestens einer der Taster selektiv betätigt werden.

Der Erfindung liegt die Aufgabe zugrunde, eine kostengünstige Bedienvorrichtung bereitzustellen, die einem Nutzer bei Betätigung eine haptische und akustische Rückmeldung bereitstellt.

Diese Aufgabe wird durch die unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist eine Bedienvorrichtung zum Bedienen eines Infotainmentsystems oder eines anderen Fahrzeugsystems, wie z.B. Klimafunktionen, Fahrzeugfunktionen, Sitzeinstellungen etc., bereitgestellt.

Die Bedienvorrichtung weist eine berührungsempfindliche Anzeigevorrichtung auf, die beweglich gelagert und dazu ausgebildet ist, zumindest ein grafisches Bedienelement anzuzeigen. Ferner umfasst die Bedienvorrichtung ein Steuergerät, eine Audiovorrichtung und ein Betätigungselement. Die berührungsempfindliche Anzeigevorrichtung ist dazu ausgebildet, sich bei einer Betätigungshandlung zu bewegen und somit das Betätigungselement zu aktivieren, wobei das Steuergerät dazu ausgebildet ist, bei einer Aktivierung des Betätigungselements eine Betätigungsposition der Betätigungshandlung auf der berührungsempfindlichen Anzeigevorrichtung zu bestimmen und mit einer Anzeigeposition des zumindest einen grafischen Bedienelements zu vergleichen. Das Steuergerät ist ferner dazu ausgebildet, bei einer Übereinstimmung der Betätigungsposition mit der Anzeigeposition die Audiovorrichtung zur Ausgabe eines akustischen Signals anzusteuern.

Mit anderen Worten kann die berührungsempfindliche Anzeigevorrichtung, die einen Touchscreen sein kann, wie ein Schalter oder Knopf gedrückt werden und somit das Betätigungselement aktivieren. Beispielsweise kann das Betätigungselement eine mechanische Taste, kapazitive Abstandssensoren, induktive Sensoren, Dehnmessstreifen, Piezoelemente oder Folien umfassen. Mit Betätigungshandlung kann beispielsweise ein Drücken der berührungsempfindlichen Anzeigevorrichtung auf das Betätigungselement gemeint sein, wodurch dieses aktiviert wird und beispielsweise ein elektrisches Signal bereitstellt. Die Anzeigevorrichtung kann beispielsweise derart beweglich sein, dass sich diese nach Überwindung eines mechanischen Widerstands um eine vorgegebene Strecke in eine Richtung bewegen lässt, bevor sie auf einen weiteren mechanischen Widerstand stößt, der die Bewegung stoppt. Das heißt, dass durch eine Bewegung oder Verschiebung der Anzeigevorrichtung eine fühlbare Haptik erzeugt werden kann.

Des Weiteren ist vorgesehen, dass bei der Aktivierung des Betätigungselements ein Steuergerät eine Betätigungsposition der Betätigungshandlung, also den Druckpunkt auf der berührungsempfindlichen Anzeigevorrichtung, bestimmt und vergleicht, ob sich auf dieser Betätigungsposition ein grafisches Bedienelement befindet. Das heißt es wird geprüft, ob eine Anzeigeposition von zumindest einem grafischen Bedienelement mit der Betätigungsposition übereinstimmt. Ist dies der Fall, kann das Steuergerät eine Audiovorrichtung ansteuern, sodass ein akustisches Signal ausgegeben wird. Somit können eine haptische Rückmeldung durch Bewegung der Anzeigevorrichtung und eine akustische Rückmeldung durch Abspielen des akustischen Signals bereitgestellt werden. Ein Vorteil davon ist, dass die Bedienvorrichtung nicht visuell bedient werden muss, da ein Benutzer durch fühlen und hören eine Rückmeldung erhält, dass seine Betätigungshandlung vorgenommen wurde und ob diese erfolgreich war. Dies ist besonders bei einer Anwendung in einem Fahrzeug vorteilhaft, da so nicht ein Blick von einer Straße genommen werden muss. Auch nimmt ein Benutzer eine haptische Rückmeldung viel intensiver wahr, wenn er gleichzeitig eine akustische Rückmeldung hört, da das haptische Gefühl stark durch eine Akustik beeinflusst wird. Als Audiovorrichtung können beispielsweise ein oder mehrere Lautsprecher vorgesehen sein, die das akustische Signal als einen Ton abspielen, wie beispielsweise ein Klicken.

Durch die Erfindung ergibt sich der Vorteil, dass eine kostengünstige Bedienvorrichtung bereitgestellt werden kann, durch die ein Benutzer deutlich unterscheiden kann, ob eine Funktion eines grafischen Bedienelements ausgelöst wurde oder nicht. Da somit eine Bedienung der Bedienvorrichtung "blind" erfolgen kann, kann auch eine Sicherheit während einer Fahrt erhöht werden. Der Benutzer kann intuitiv unterscheiden, ob er ein grafisches Bedienelement auf dem Touchscreen (berührungsempfindliche Anzeigevorrichtung) getätigt hat oder ob er neben das grafische Bedienelement gedrückt hat. Dies kann eine Ablenkung während einer Fahrt reduzieren. Des Weiteren ist die beschriebene Bedienvorrichtung deutlich billiger als andere komplexe Lösungen.

Des Weiteren ist vorgesehen, dass die beweglich gelagerte berührungsempfindliche Anzeigevorrichtung dazu ausgebildet ist, sich um eine Neigungsachse herum in Richtung des Betätigungselements zu neigen. Das heißt, dass die berührungsempfindliche Anzeigevorrichtung wie ein großer Schalter ausgebildet ist, der um eine Neigungsachse herum drehbar ist, wobei bei einer Drehung um die Neigungsachse das Betätigungselement aktiviert wird. Die Neigungsachse kann hierbei beispielsweise waagerecht in einer Mitte der Anzeigevorrichtung vorgesehen sein. Hierdurch ergibt sich der Vorteil, dass ein Benutzer eine verbesserte haptische Rückmeldung bei einer Betätigungshandlung erhält.

Zu der Erfindung gehören auch Ausführungsformen, durch die sich zusätzliche Vorteile ergeben.

Eine Ausführungsform sieht vor, dass das Betätigungselement dazu ausgebildet ist, einen lautlosen haptischen Betätigungseffekt bereitzustellen. Das bedeutet, dass das Betätigungselement einem Benutzer haptische Rückmeldung gibt, beispielsweise indem bei Betätigen ein Widerstand auftritt, der dem Benutzer zeigt, ob das Betätigungselement aktiviert wurde. Das Betätigungselement selber soll jedoch weder aktiv oder passiv ein Geräusch erzeugen. Zum Beispiel kann das Betätigungselement die Bewegung der Anzeigevorrichtung begrenzen oder stoppen, wobei die Aktivierung des Betätigungselements vorzugsweise durch das Auftreffen der Anzeigevorrichtung auf das Betätigungselement ausgelöst wird. Das hat den Vorteil, dass ein Benutzer nur dann eine akustische Rückmeldung erhält, wenn die Anzeigeposition des grafischen Bedienelements durch die Betätigungshandlung getroffen wurde. So können Irritationen des Benutzers vermieden werden.

Vorzugsweise weist das Betätigungselement einen Taster, insbesondere einen Mikrotaster, auf, der durch Hereindrücken aktiviert wird und somit beispielsweise ein elektronisches Signal erzeugt, wobei durch das elektronische Signal das Steuergerät dazu veranlasst wird, die Positionsüberprüfung der Betätigungsposition und der Anzeigeposition durchzuführen. Hierdurch ergibt sich der Vorteil, dass ein Taster eine kostengünstige Möglichkeit darstellt, eine Bewegung der Anzeigevorrichtung durch Eindrücken des Tasters zu detektieren.

Eine weitere Ausführungsform sieht vor, dass das Betätigungselement dazu ausgebildet ist, einen Druck durch die Betätigungshandlung zu messen und ein druckabhängiges Steuersignal zu erzeugen und dass die Audiovorrichtung dazu ausgebildet ist, eine Lautstärke des akustischen Signals in Abhängigkeit des druckabhängigen Signals anzupassen. Mit anderen Worten kann das Betätigungselement einen Druck oder eine Kraft messen, mit welcher die Betätigung erfolgt. Daraufhin kann ein druckabhängiges Steuersignal erzeugt werden, das eine Information über den Betrag des Drucks beziehungsweise der Kraft umfasst, wobei eine Lautstärke des akustischen Signals mit der Information des druckabhängigen Signals angepasst werden kann. Hierfür kann beispielsweise ein kapazitiver oder induktiver Drucksensor verwendet werden, der beispielsweise auch in einem Taster vorgesehen sein kann. Durch diese Ausführungsform ergibt sich der Vorteil, dass ein Benutzer auch eine Rückmeldung über eine Stärke des Drucks auf die Anzeigevorrichtung erhält.

In einer weiteren Ausführungsform ist vorgesehen, dass das Steuergerät ferner dazu ausgebildet ist, die Audiovorrichtung zur Ausgabe eines akustischen Fehlersignals anzusteuern, falls keine Übereinstimmung der Betätigungsposition mit der Anzeigeposition bei der Aktivierung des Betätigungselements vorliegt. Das heißt, dass ein Fehlersignal, das sich vorzugseise von dem akustischen Signal unterscheiden kann, ausgegeben wird, falls ein Benutzer neben die Anzeigeposition des grafischen Bedienelements drückt. Durch diese Ausführungsform ergibt sich der Vorteil, dass ein Benutzer bei einer blinden Bedienung der Bedienvorrichtung eine akustische Rückmeldung erhält, wenn das graphische Bedienelement nicht getroffen wurde, woraufhin der Benutzer die Betätigungsposition anpassen kann.

Eine weitere Ausführungsform sieht vor, dass das Steuergerät ferner dazu ausgebildet ist, bei der Aktivierung des Betätigungselements und bei Übereinstimmung der Betätigungsposition mit der Anzeigeposition das Infotainmentsystem zur Ausführung einer dem grafischen Bedienelement zugeordneten Funktion anzusteuern. Mit anderen Worten kann neben der Erzeugung eines akustischen Signals gleichzeitig eine Funktion des Infotainmentsystems durchgeführt werden, die von dem grafischen Bedienelement angezeigt wird. Beispielsweise kann das grafische Bedienelement ein Navigationssymbol anzeigen und durch Betätigung dieses Navigationssymbols kann neben dem akustischen Signal ein Navigationsmodus gestartet werden.

Bevorzugt kann vorgesehen sein, dass das Steuergerät ferner dazu ausgebildet ist, das Infotainmentsystem zur Ausführung einer dem grafischen Bedienelement zugeordneten Funktion in Abhängigkeit des druckabhängigen Signals anzusteuern. Das heißt, dass beispielsweise bei einem erhöhten Druck auf die Anzeigevorrichtung eine Funktion des grafischen Bedienelements in Abhängigkeit des Betrags des Drucks verändert werden kann. Beispielsweise kann durch einen erhöhten Druck ein höheres Veränderungsintervall bei einer Einstellung einer Temperatur einer Klimaanlage erzeugt werden. Beispielsweise kann bei geringem Druck die Temperatur in 0,5-Grad-Celsius-Schritten verstellt werden und bei einem höheren Druck in 2-Grad-Celsius-Schritten.

In einem alternativen nicht beanspruchten Beispiel kann die beweglich gelagerte berührungsempfindliche Anzeigevorrichtung auch dazu ausgebildet sein, sich senkrecht zu einer Anzeigefläche der Anzeigevorrichtung als Ganzes in Richtung des Betätigungselements zu bewegen. Das heißt, dass die berührungsempfindliche Anzeigevorrichtung wie eine große Taste ausgebildet sein kann, die in Richtung des Betätigungselements bewegbar ist.

Erfindungsgemäß ist auch ein Verfahren zum Bereitstellen eines akustischen Signals für eine Bedienvorrichtung vorgesehen, wobei die Bedienvorrichtung eine berührungsempfindliche Anzeigevorrichtung aufweist, die beweglich gelagert ist und dazu ausgebildet ist, zumindest ein grafisches Bedienelement anzuzeigen. Das Verfahren umfasst als Schritt a) ein Aktivieren eines Betätigungselements durch Bewegen der berührungsempfindlichen Anzeigevorrichtung bei einer Betätigungshandlung, wobei die beweglich gelagerte berührungsempfindliche Anzeigevorrichtung um eine Neigungsachse herum in Richtung des Betätigungselements geneigt wird, als Schritt b) ein Bestimmen einer Betätigungsposition der Betätigungshandlung bei Aktivierung des Betätigungselements auf der berührungsempfindlichen Anzeigevorrichtung, als Schritt c) ein Vergleichen der Betätigungsposition mit einer Anzeigeposition des zumindest einen graphischen Bedienelements und als Schritt d) ein Bereitstellen eines akustischen Signals, falls der Vergleich der Betätigungsposition mit der Anzeigeposition ergibt, dass die Betätigungsposition mit der Anzeigeposition übereinstimmt. Hierbei ergeben sich gleiche Vorteile und Variationsmöglichkeiten wie bei der Bedienvorrichtung.

Ein weiterer Aspekt der Erfindung betrifft ein Kraftfahrzeug mit einer Bedienvorrichtung gemäß einer der vorhergehenden Ausführungsformen.

Zu der Erfindung gehört auch die Steuervorrichtung für das Kraftfahrzeug. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Bedienvorrichtung beschrieben worden sind. Aus diesem Grund sind die entsprechenden Weiterbildungen des erfindungsgemäßen Verfahrens hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: ein Kraftfahrzeug mit einer Bedienvorrichtung gemäß einer beispielhaften Ausführungsform;
- Fig. 2: ein Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

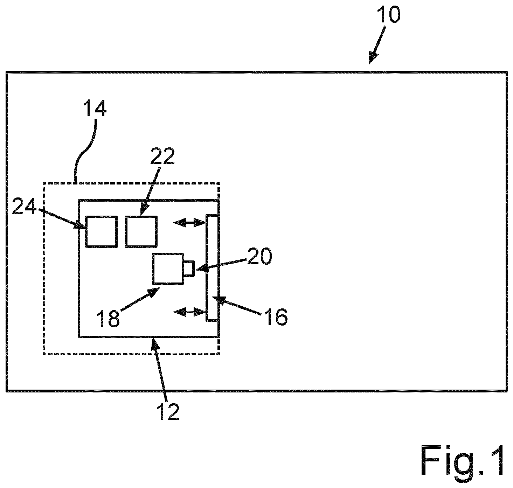

In Fig. 1 ist ein stark schematisiertes Kraftfahrzeug 10 mit einer Bedienvorrichtung 12 gemäß einer beispielhaften Ausführungsform dargestellt. Die Bedienvorrichtung 12 kann zum Bedienen eines Infotainmentsystems 14 des Kraftfahrzeugs 10 vorgesehen sein. Das Infotainmentsystem 14 kann dabei beispielsweise ein Fahrzeugcomputer sein, der fahrzeugspezifische Funktionen bereitstellen kann, wie beispielsweise Telefoniefunktionen, Navigationsfunktionen, Klimafunktionen und Unterhaltungsfunktionen.

Die Bedienvorrichtung 12 weist eine berührungsempfindliche Anzeigevorrichtung 16 auf, also ein kombiniertes Ein- und Ausgabegerät, auf dem zumindest ein grafisches Bedienelement angezeigt werden kann, durch welches dem graphischen Bedienelement zugeordnete Funktionen gesteuert werden können. Dem grafischen Bedienelement zugeordnete Funktionen können beispielsweise die oben genannten Funktionen des Infotainmentsystems umfassen. Die berührungsempfindliche Anzeigevorrichtung 16 kann ein induktiver oder kapazitiver Touchscreen sein.

Die berührungsempfindliche Anzeigevorrichtung 16 ist in der Bedienvorrichtung 12 beweglich gelagert. Das heißt, dass die berührungsempfindliche Anzeigevorrichtung 16 nicht fest an einer Oberfläche der Bedienvorrichtung 12 fixiert ist, sondern beispielsweise Führungsschienen an den Seiten aufweist, wodurch die berührungsempfindliche Anzeigevorrichtung 16 in ein Gehäuse der Bedienvorrichtung 12 bewegt werden kann. In vorteilhafter Weise kann die berührungsempfindliche Anzeigevorrichtung 16 als Ganzes in eine Ebene verschoben werden, die sich parallel hinter der ursprünglichen Position befindet. Eine Bewegung kann beispielsweise eine Strecke von einem bis zehn Millimeter umfassen, insbesondere zwei Millimeter.

Diese Strecke kann ausreichen, um die berührungsempfindliche Anzeigevorrichtung 16 bei einer Betätigungshandlung, das bedeutet bei einem Drücken, auf oder an ein Betätigungselement 18 zu bewegen. Das Betätigungselement 18 kann beispielsweise einen Taster 20, insbesondere einen Mikrotaster 20, aufweisen. Durch die Bewegung der berührungsempfindlichen Anzeigevorrichtung 16 in Richtung des Betätigungselements 18 kann der Mikrotaster 20 hereingedrückt werden oder mit anderen Worten aktiviert werden. Vorzugsweise kann das Betätigungselement 18 hierbei einen lautlosen haptischen Betätigungseffekt bereitstellen. Das heißt, dass ein Benutzer bei der Betätigungshandlung einen Widerstand fühlt, wenn der Taster 20 hereingedrückt ist, dabei jedoch kein akustisches Signal, wie beispielsweise ein akustisches Klicken, auftritt. Dies ist von Vorteil, da ein Benutzer haptisch spürt, dass eine Betätigungshandlung durchgeführt wurde, ein akustisches Signal jedoch erst dann auftreten soll, wenn die Betätigungshandlung erfolgreich war.

Wird das Betätigungselement 18 aktiviert, wird ein Signal an ein Steuergerät 22 gesendet, was daraufhin überprüft, ob eine Betätigungsposition der Betätigungshandlung auf der berührungsempfindlichen Anzeigevorrichtung 16 mit einer Anzeigeposition des zumindest einen grafischen Bedienelements übereinstimmt. Das heißt, dass detektiert wird, an welcher Stelle ein Benutzer auf den Touchscreen gedrückt hat und ob sich an dieser Stelle ein grafisches Bedienelement befindet. Ist dies der Fall, steuert das Steuergerät 22 eine Audiovorrichtung 24 zur Ausgabe eines akustischen Signals an. Insbesondere kann die Audiovorrichtung 24 ein Lautsprecher sein, der beispielsweise ein akustisches Klicken abspielt. Somit kann ein Benutzer eine akustische Rückmeldung erhalten, dass das grafische Bedienelement durch seine Betätigungshandlung gedrückt wurde. Zusätzlich kann neben dem akustischen Signal auch die dem grafischen Bedienelement zugeordnete Funktion durch das Infotainmentsystem 14 ausgeführt werden. Das hat den Vorteil, dass ein Benutzer während einer Fahrt mit dem Kraftfahrzeug 10 den Blick nicht von einer Straße nehmen muss, wenn er die Bedienvorrichtung 12 bedient, wodurch eine Sicherheit während einer Fahrt verbessert werden kann.

Zusätzlich kann auch vorgesehen sein, dass das Steuergerät 22 die Audiovorrichtung 24 auch dann ansteuert, falls keine Übereinstimmung der Betätigungsposition mit der Anzeigeposition festgestellt wurde, in diesem Fall jedoch derart, dass ein akustisches Fehlersignal durch die Audiovorrichtung 24 ausgegeben wird. Das akustische Fehlersignal kann sich insbesondere von dem akustischen Signal, welches bei einer Übereinstimmung auftritt, unterscheiden, sodass ein Benutzer eine akustische Rückmeldung erhält, wenn er neben das grafische Bedienelement geklickt hat.

Vorzugsweise kann das Betätigungselement 18 auch dazu ausgebildet sein, eine Stärke der Betätigungshandlung zu erfassen. Damit ist beispielsweise gemeint, dass durch das Betätigungselement 18 gemessen werden kann, mit welchem Druck ein Benutzer die berührungsempfindliche Anzeigevorrichtung 16 auf das Betätigungselement 18 drückt. Hierfür kann beispielsweise der Taster 20 mehrstufig sein, wobei zwischen jeder Stufe ein mechanischer Widerstand vorgesehen ist. Alternativ kann vorgesehen sein, dass ein elektronischer Drucksensor eine Kraftkurve der Betätigungshandlung misst. Dieser gemessene Druck kann dann von dem Betätigungselement 18 als ein druckabhängiges Steuersignal bereitgestellt werden.

Das druckabhängige Steuersignal kann beispielsweise dazu verwendet wird, die dem grafischen Bedienelement zugeordnete Funktion je nach verwendeter Kraft der Betätigungshandlung anzupassen, wobei zusätzlich eine Lautstärke der Audiovorrichtung 24 angepasst werden kann, sodass beispielsweise bei einem hohen Druck auch eine Lautstärke des akustischen Signals erhöht wird.

Durch die Bedienvorrichtung 12 ist eine kostengünstige und effiziente Methode zur Bedienung des Infotainmentsystem 14 bereitgestellt. Zusätzlich ist es beispielsweise bei einer Verwendung der Bedienvorrichtung 12 in dem Fahrzeug 10 von Vorteil, dass das Infotainmentsystem 14 gesteuert werden kann, ohne einen Blick von der Straße nehmen zu müssen. Ein Fahrer des Fahrzeugs 10 erhält für die Betätigungshandlung eine haptische Rückmeldung und für eine erfolgreiche Betätigungshandlung eine akustische Rückmeldung, wodurch auch eine Sicherheit des Fahrers erhöht werden kann.

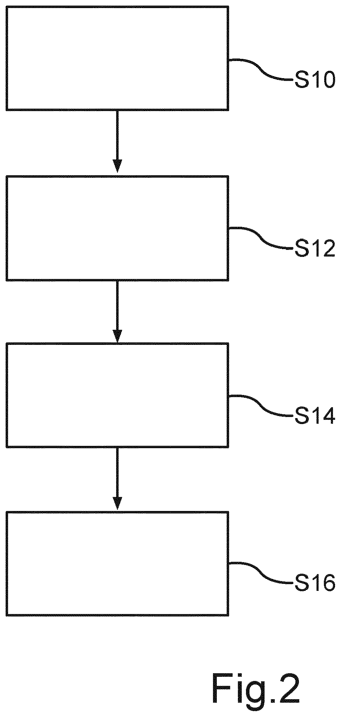

In Fig. 2 ist ein Verfahrensdiagramm zum Bereitstellen eines akustischen Signals für eine Bedienvorrichtung 12 dargestellt. Die Bedienvorrichtung 12 weist in diesem Ausführungsbeispiel eine berührungsempfindliche Anzeigevorrichtung 16 auf, die beweglich gelagert ist und dazu ausgebildet ist, zumindest ein grafisches Bedienelement anzuzeigen.

In einem Schritt S10 wird ein Betätigungselement durch Bewegen der berührungsempfindlichen Anzeigevorrichtung bei einer Betätigungshandlung aktiviert. In einem Schritt S12 wird eine Betätigungsposition der Betätigungshandlung bei Aktivierung des Betätigungselements auf der berührungsempfindlichen Anzeigevorrichtung 16 bestimmt. Anschließend wird in einem Schritt S14 die Betätigungsposition mit einer Anzeigeposition des zumindest einen grafischen Bedienelements verglichen. Schließlich wird in einem Schritt S16 ein akustisches Signal bereitgestellt, falls der Vergleich der Betätigungsposition mit der Anzeigeposition ergibt, dass diese übereinstimmen.

In einer anderen beispielhaften Ausführungsform besteht ein Aspekt darin, dass ein Display (berührungsempfindliche Anzeigevorrichtung 16) minimal beweglich aufgehängt ist. Hinter dem Display beziehungsweise Touchscreen 16 befindet sich ein lautloser Mikrotaster 20. Bei der Betätigung des Touchscreen 16 wird dieser Mikrotaster 20 gedrückt. Damit kann die Betätigungskraft ermittelt werden. Die Schaltkraft des Mikrotasters 20 ist notwendig für ein Signal. Gleichzeitig kann der Taster 20 einen haptischen Betätigungseffekt erzeugen.

Die Touchsensorik (Steuergerät 22) ermittelt zeitgleich die Position der Betätigung, das heißt des Fingers auf dem Touchscreen. Wenn an der betätigten Position ein betätigbares Element (grafisches Bedienelement) angezeigt wird, erfolgt ein akustischer Klick (akustisches Signal) über Lautsprecher (Audiovorrichtung 24).

Sollte der Benutzer auf einen anderen Bereich drücken (zum Beispiel den Rand), kann der lautlose Mikrotaster 20 auch schalten, ein akustischer Klick erfolgt jedoch nicht. Somit erfolgt die akustische Rückmeldung selektiv nur, wenn der Taster 20 betätigt wurde und an dieser Stelle auch ein betätigbares Element (grafisches Bedienelement) angezeigt wird.

Da das haptische Gefühl stark durch die Akustik beeinflusst wird, nimmt der Benutzer eine Tasterbestätigung viel intensiver wahr, wenn er gleichzeitig ein akustisches Signal hört. Dieser Effekt kann ausgenutzt werden, um eine gefühlte Intensität zu ändern, wenn ein grafisches Bedienelement betätigt wird oder ein Bereich ohne Funktion. Zusätzlich kann der Benutzer deutlich unterscheiden, ob eine dem grafischen Bedienelement zugeordnete Funktion ausgelöst wurde oder nicht. Die Funktionsauslösung kann mit einem akustischen Klick bestätigt werden. Beim Drücken im funktionslosen Bereich erfolgt kein akustischer Klick.

Das ist vorteilhaft, da eine Ablenkung während einer Fahrt reduziert werden kann, da ein Benutzer intuitiv unterscheiden kann, ob er ein grafisches Element auf dem Touchscreen betätigt hat oder ob er versehentlich neben das Element gedrückt hat. Des Weiteren ist die beschriebene Bedienvorrichtung 12 deutlich billiger als andere komplexe Lösungen.

Insgesamt zeigen die Beispiele, wie durch die Erfindung eine Methode zur Erzeugung eines situativen akustischen Klicks bei einem haptischen Touchscreen bereitgestellt werden kann.

## Patentansprüche

1. Bedienvorrichtung (12) zum Bedienen eines Infotainmentsystems (14), mit
- einer berührungsempfindlichen Anzeigevorrichtung (16), die beweglich gelagert und dazu ausgebildet ist, zumindest ein graphisches Bedienelement anzuzeigen;
- einem Steuergerät (22), und
- einem Betätigungselement (18),
- wobei die berührungsempfindliche Anzeigevorrichtung (16) ferner dazu ausgebildet ist, sich bei einer Betätigungshandlung zu bewegen und somit das Betätigungselement (18) zu aktivieren,
- wobei das Steuergerät (22) dazu ausgebildet ist, bei einer Aktivierung des Betätigungselements (18) eine Betätigungsposition der Betätigungshandlung auf der berührungsempfindlichen Anzeigevorrichtung (16) zu bestimmen und mit einer Anzeigeposition des zumindest einen graphischen Bedienelements zu vergleichen,
**gekennzeichnet durch**
- eine Audiovorrichtung (24),
- wobei das Steuergerät (22) ferner dazu ausgebildet ist, bei einer Übereinstimmung der Betätigungsposition mit der Anzeigeposition die Audiovorrichtung (24) zur Ausgabe eines akustischen Signals anzusteuern; und
- wobei die beweglich gelagerte berührungsempfindliche Anzeigevorrichtung (16) dazu ausgebildet ist, sich um eine Neigungsachse herum in Richtung des Betätigungselements (18) zu neigen.

2. Bedienvorrichtung (12) nach Anspruch 1, wobei das Betätigungselement (18) dazu ausgebildet ist, einen lautlosen haptischen Betätigungseffekt bereitzustellen.

3. Bedienvorrichtung (12) nach einem der vorhergehenden Ansprüche wobei das Betätigungselement (18) einen Taster (20), insbesondere einen Mikrotaster, aufweist.

4. Bedienvorrichtung (12) nach einem der vorhergehenden Ansprüche, wobei das Betätigungselement (18) dazu ausgebildet ist, einen Druck durch die Betätigungshandlung zu messen und ein druckabhängiges Steuersignal zu erzeugen und wobei die Audiovorrichtung (24) dazu ausgebildet ist, eine Lautstärke des akustischen Signals in Abhängigkeit des druckabhängigen Signals anzupassen.

5. Bedienvorrichtung (12) nach einem der vorhergehenden Ansprüche, wobei das Steuergerät (22) ferner dazu ausgebildet ist, die Audiovorrichtung (24) zur Ausgabe eines akustischen Fehlersignals anzusteuern, falls keine Übereinstimmung der Betätigungsposition mit der Anzeigeposition bei der Aktivierung des Betätigungselements (18) vorliegt.

6. Bedienvorrichtung (12) nach einem der vorhergehenden Ansprüche, wobei das Steuergerät (22) ferner dazu ausgebildet ist, bei der Aktivierung des Betätigungselements (18) und bei Übereinstimmung der Betätigungsposition mit der Anzeigeposition das Infotainmentsystem (14) zur Ausführung einer dem graphischen Bedienelement zugeordneten Funktion anzusteuern.

7. Bedienvorrichtung (12) nach Anspruch 6 in dessen Rückbezug auf Anspruch 4, wobei das Steuergerät (22) ferner dazu ausgebildet ist, das Infotainmentsystem (14) zur Ausführung einer dem graphischen Bedienelement zugeordneten Funktion in Abhängigkeit des druckabhängigen Signals anzusteuern.

8. Verfahren zum Bereitstellen eines akustischen Signals für eine Bedienvorrichtung (12), wobei die Bedienvorrichtung (12) eine berührungsempfindliche Anzeigevorrichtung (16) aufweist, die beweglich gelagert ist und dazu ausgebildet ist, zumindest ein graphisches Bedienelement anzuzeigen; mit den Schritten:
a) Aktivieren (S10) eines Betätigungselements (18) durch bewegen der berührungsempfindlichen Anzeigevorrichtung (16) bei einer Betätigungshandlung, wobei die beweglich gelagerte berührungsempfindliche Anzeigevorrichtung (16) um eine Neigungsachse herum in Richtung des Betätigungselements (18) geneigt wird;
b) Bestimmen (S12) einer Betätigungsposition der Betätigungshandlung bei Aktivierung des Betätigungselements (18) auf der berührungsempfindlichen Anzeigevorrichtung (16);
c) Vergleichen (S14) der Betätigungsposition mit einer Anzeigeposition des zumindest einen graphischen Bedienelements;
d) Bereitstellen (S16) eines akustischen Signals, falls der Vergleich in Schritt c) ergibt, dass die Betätigungsposition mit der Anzeigeposition übereinstimmt.

9. Kraftfahrzeug (10) mit einer Bedienvorrichtung (12) nach einem der Ansprüche 1 bis 7.

## Claims

1. An operating device (12) for operating an infotainment system (14), comprising:
- a touch-sensitive display device (16), which is movably supported and formed to display at least one graphical operating element;
- a control unit (22), and
- an actuating element (18),
- wherein the touch-sensitive display device (16) is further formed to move upon an actuating action and thus to activate the actuating element (18),
- wherein the control unit (22) is formed to determine an actuation position of the actuating action on the touch-sensitive display device (16) upon an activation of the actuating element (18) and to compare it to a display position of the at least one graphical operating element,
**characterized by**
- an audio device (24),
- wherein the control unit (22) is further formed to control the audio device (24) for outputting an acoustic signal upon coincidence of the actuation position with the display position; and
- wherein the movably supported touch-sensitive display device (16) is formed to incline around an inclination axis towards the actuating element (18).

2. The operating device (12) according to claim 1, wherein the actuating element (18) is formed to provide a silent haptic actuation effect.

3. The operating device (12) according to any one of the preceding claims,
wherein the actuating element (18) comprises a button (20), in particular a micro button.

4. The operating device (12) according to any one of the preceding claims,
wherein the actuating element (18) is formed to measure a pressure by the actuating action and to generate a pressure-dependent control signal, and wherein the audio device (24) is formed to adapt a volume of the acoustic signal depending on the pressure-dependent signal.

5. The operating device (12) according to any one of the preceding claims,
wherein the control unit (22) is further formed to control the audio device (24) for outputting an acoustic error signal if a coincidence of the actuation position with the display position is not present upon the activation of the actuating element (18).

6. The operating device (12) according to any one of the preceding claims,
wherein the control unit (22) is further formed to control the infotainment system (14) for executing a function associated with the graphical operating element upon the activation of the actuating element (18) and upon coincidence of the actuation position with the display position.

7. The operating device (12) according to claim 6 in relation thereof to claim 4, wherein the control unit (22) is further formed to control the infotainment system (14) for executing a function associated with the graphical operating element depending on the pressure-dependent signal.

8. A method for providing an acoustic signal for an operating device (12),
wherein the operating device (12) comprises a touch-sensitive display device (16), which is movably supported and is formed to display at least one graphical operating element; comprising the steps:
a) activating (S10) an actuating element (18) by moving the touch-sensitive display device (16) upon an actuating action, wherein the movably supported touch-sensitive display device (16) is inclined around an inclination axis towards the actuating element (18);
b) determining (S12) an actuation position of the actuating action upon activation of the actuating element (18) on the touch-sensitive display device (16);
c) comparing (S14) the actuation position to a display position of the at least one graphical operating element;
d) providing (S16) an acoustic signal if the comparison in step c) yields that the actuation position coincides with the display position.

9. A motor vehicle (10) with an operating device (12) according to any one of claims 1 to 7.

## Revendications

1. Dispositif de commande (12) destiné à commander un système d'infodivertissement (14), comportant
- un dispositif d'affichage tactile (16) monté de manière mobile et configuré pour afficher au moins un élément de commande graphique ;
- une commande (22), et
- un élément d'actionnement (18),
- le dispositif d'affichage tactile (16) étant en outre configuré pour se déplacer lors d'un geste d'actionnement et pour activer ainsi l'élément d'actionnement (18),
- la commande (22) étant configurée pour déterminer une position d'actionnement du geste d'actionnement sur le dispositif d'affichage tactile (16) lors d'une activation de l'élément d'actionnement (18) et pour la comparer avec une position d'affichage du au moins un élément de commande graphique,
**caractérisé par** :
- un dispositif audio (24),
- la commande (22) étant en outre configurée pour commander le dispositif audio (24) afin d'émettre un signal acoustique en cas de correspondance entre la position d'actionnement et la position d'affichage ; et
- le dispositif d'affichage tactile (16) monté de manière mobile étant configuré pour s'incliner en direction de l'élément d'actionnement (18) autour d'un axe d'inclinaison.

2. Dispositif de commande (12) selon la revendication 1, dans lequel l'élément d'actionnement (18) est configuré pour produire un effet d'actionnement haptique silencieux.

3. Dispositif de commande (12) selon l'une des revendications précédentes, dans lequel l'élément d'actionnement (18) comporte un bouton-poussoir (20), en particulier un micro bouton-poussoir.

4. Dispositif de commande (12) selon l'une des revendications précédentes, dans lequel l'élément d'actionnement (18) est configuré pour mesurer une pression créée par le geste d'actionnement et pour générer un signal de commande sensible à la pression, et le dispositif audio (24) étant configuré pour adapter un volume sonore du signal acoustique en fonction du signal sensible à la pression.

5. Dispositif de commande (12) selon l'une des revendications précédentes, dans lequel la commande (22) est en outre configurée pour commander le dispositif audio (24) afin d'émettre un signal d'erreur acoustique s'il n'existe aucune correspondance entre la position d'actionnement et la position d'affichage lors de l'activation de l'élément d'actionnement (18).

6. Dispositif de commande (12) selon l'une des revendications précédentes, dans lequel la commande (22) est en outre configurée pour commander le système d'infodivertissement (14) de manière à exécuter une fonction associée à l'élément de commande graphique, lors de l'activation de l'élément d'actionnement (18) et en cas de correspondance entre la position d'actionnement et la position d'affichage.

7. Dispositif de commande (12) selon la revendication 6 lorsque dépendante de la revendication 4, dans lequel la commande (22) est en outre configurée pour commander le système d'infodivertissement (14) afin d'exécuter une fonction associée à l'élément de commande graphique en fonction du signal sensible à la pression.

8. Procédé pour fournir un signal acoustique pour un dispositif de commande (12), dans lequel le dispositif de commande (12) comporte un dispositif d'affichage tactile (16) monté de manière mobile et configuré pour afficher au moins un élément de commande graphique ; comportant les étapes de :
a) activer (S10) un élément d'actionnement (18) par un déplacement du dispositif d'affichage tactile (16) lors d'un geste d'actionnement, le dispositif d'affichage tactile (16) monté de manière mobile étant incliné en direction de l'élément d'actionnement (18) autour d'un axe d'inclinaison ;
b) déterminer (S12) une position d'actionnement du geste d'actionnement lors de l'activation de l'élément d'actionnement (18) sur le dispositif d'affichage tactile (16) ;
c) comparer (S14) la position d'actionnement avec une position d'affichage du au moins un élément de commande graphique ;
d) fournir (S16) un signal acoustique si la comparaison de l'étape c) engendre une correspondance entre la position d'actionnement et la position d'affichage.

9. Véhicule à moteur (10) comportant un dispositif de commande (12) selon l'une des revendications 1 à 7.
